# EUROPÄISCHE PATENTSCHRIFT

(11) **EP 1 617 111 B1**
(45) Veröffentlichungstag und Bekanntmachung des Hinweises auf die Patenterteilung: **16.04.2008**
(21) Anmeldenummer: 05106317.0
(22) Anmeldetag: 11.07.2005
(51) Int. Cl.: F16J 15/06, F16M 1/00

(54) **Dichtungsanordnung**
Sealing arrangement
Garniture d'étanchéité

(30) Priorität: 14.07.2004 DE 102004033892
(43) Veröffentlichungstag der Anmeldung: 18.01.2006
(73) Patentinhaber: Mann + Hummel GmbH, 71638 Ludwigsburg (DE)
(72) Erfinder: Jainek, Herbert, 74074, Heilbronn (DE)
(74) Vertreter: Voth, Gerhard

(56) Entgegenhaltungen:
- EP-A- 0 618 385
- EP-A- 1 300 580
- DE-A1- 19 651 838
- DE-A1- 19 736 431
- DE-C- 838 528
- DE-U1- 29 720 094
- DE-U1- 29 822 719

## Beschreibung

### Stand der Technik

Die Erfindung betrifft eine Dichtungsanordnung zwischen einem Kunststoffformteil und einer metallischen Anlagefläche. Eine derartige Dichtungsanordnung ist aus der Druckschrift DE-U-29822719 bekannt.

Dichtungsanordnungen sollen das Austreten oder Eintreten von Flüssigkeiten, Gasen oder festen Stoffen zwischen Gehäuseverbindungen verhindern. Die dichtende Verbindung kann dadurch erreicht werden, das der zwischen den Gehäusen abzudichtende Querschnitt durch ein elastisches Dichtmittel umschlossen wird, welches sich der Oberflächenkontur der abzudichtenden Oberflächen anpasst und somit jeglichen Zwischenraum der Gehäuseverbindungen verschließt. Die Grenzen dieses Dichtprinzips werden z.B. durch unterschiedliche Materialhärten oder auch durch unterschiedliche Materialausdehnungen der zur Dichtungspaarung verwendeten Materialien gesetzt. Nach dem Stand der Technik wird dieses Dichtprinzip dadurch optimiert, dass der abzudichtende Querschnitt von einer Nut umschlossen wird, in welcher ein elastisches Dichtmedium angeordnet ist. Die Grenzen dieses Dichtprinzips werden überschritten, wenn die Elastizität des Dichtmittels die Schwankungsbreite des Dichtspaltes nicht mehr ausgleichen kann.

Die Aufgabe der vorliegenden Erfindung besteht darin, eine Dichtungsanordnung zu schaffen welche es ermöglicht, die durch Fertigungstoleranzen von Kunststoff verursachte Schwankungsbreite eines Dichtspaltes zu kompensieren.

Diese Aufgabe wird durch die Merkmale des Patentanspruches 1 gelöst.

### Vorteile der Erfindung

Die erfindungsgemäße Dichtungsanordnung zwischen einem Kunststoffformteil und einer metallischen Anlagefläche sieht zwischen dem Kunststoffformteil und der metallischen Anlagefläche einen Dichtungsträger vor, welcher direkt auf die metallische Anlagefläche gespannt ist. Die metallische Anlagefläche ist in ihrer einfachsten Form eine ebene Fläche, sie kann jedoch auch gewölbt oder abgestuft gestaltet sein und bildet die kommunizierende Gegenform zur Anlagefläche des Dichtungsträgers. Der Dichtungsträger umschließt die Dichtquerschnitte und bildet zusammen mit dem Kunststoffformteil, die um die Dichtungsquerschnitte laufende Nut. Dabei ist die Nutwand des Dichtungsträgers idealerweise auf der druckabgewandten Seite angeordnet, wodurch die Elastomerdichtung infolge des Druckes an der Seite des Dichtungsträgers eine vergrößerte Anlagefläche bildet. Der Nutgrund wird auf der Seite des Dichtungsträgers durch einen überstehenden Absatz des Dichtungsträgers gebildet. Dieser Nutgrund erstreckt sich zwischen der Nutwand des Dichtungsträgers und der Nutwand des Kunststoffformteils. Die Nutwand des Kunststoffformteils besteht aus Rippen, welche den Dichtquerschnitt parallel umschließen. Da die überstehenden Rippen des Kunststoffformteils eine Nutwand bilden, sind sie in ihrer Länge möglichst nahe an die metallische Anlagefläche anzupassen, wobei aufgrund der Fertigungstoleranzen ein Spalt zwischen Rippen und der metallischen Anlagefläche gewährleistet sein muss. Die Rippen können direkt an das Kunststoffformteil angespritzt, angeklebt, angeschweißt oder angefügt sein.

Die in der Nut angeordnete Elastomerdichtung liegt an der Nutwand des Dichtungsträgers und der Nutwand des Kunststoffformteils bzw. an dessen Rippen an. Der Nutgrund wird durch die metallische Anlagefläche und den gegenüberliegenden Absatz des Dichtungsträgers gebildet. Die Elastomerdichtung stellt somit eine dichte Verbindung zwischen metallischer Anlagefläche und Dichtungsträger, als auch zwischen Dichtungsträger und Kunststoffformteil her.

Vorteilhaft bei dieser Lösung ist die Positionierung der Elastomerdichtung zwischen dem Nutgrund des Dichtungsträgers und der metallischen Anlagefläche, wobei die Nuthöhe und eine Nutwand durch ein metallisches Bauteil bestimmt werden. Dadurch wird der Einfluss der hohen Fertigungstoleranzen des Kunststoffes auf die Nutgeometrie minimiert und die Nutgeometrie wird im Wesentlichen vom metallischen Dichtungsträger bestimmt. Weitere Einflüsse auf die Nutgeometrie bezüglich der Materialeigenschaften und der Fertigungstoleranzen des Kunststoffes, wie z.B. Flanschdurchbiegung oder Wärmeausdehnung können somit vom Dichtungsträger kompensiert werden. Der Einfluss des Kunststoffmaterials auf die Nut beschränkt sich auf eine Seite der Nutwand. Somit können flexiblere Materialpaarungen kombiniert werden.

Gemäß einer weiteren vorteilhaften Ausführung der Erfindung kann der Dichtungsträger durch eine Schraubverbindung direkt über eine Buchse, welche eine Bohrung des Kunststoffformteils durchdringt, an die metallische Anlagefläche gespannt werden.

Hierdurch wird der Einfluss von Fertigungstoleranzen des Kunststoffformteils auf den Dichtungsträger minimiert und der Einfluss des weichen kriechfähigen Kunststoffes auf die Verwindungssteifigkeit des Dichtungsträgers umgangen.

Eine weitere vorteilhafte Möglichkeit ergibt sich durch das Anordnen eines Spannmittels zwischen Schraubenkopf und der Buchse des Dichtungsträgers. Beim Anspannen durch eine Schraubverbindung wird so der Dichtungsträger auf die metallische Anlagefläche gespannt, wobei das Kunststoffformteil zwischen den Spannflächen spannungsfrei oder unter leichtem Spiel eingepasst ist. Das Kunststoffformteil bleibt dabei durch die Schraubverbindung angespannt. Das Anspannen beider Komponenten kann somit in vorteilhafter Weise durch eine bzw. der für die Befestigung des Flansches ausgewählten Anzahl von Schraubenverbindungen erfolgen. Hierdurch verringert sich der Material und der Montageaufwand.

Eine weitere vorteilhafte Ausführungsform der Erfindung ermöglicht sich durch die Anordnung einer Y-förmigen Elastomerdichtung in der Dichtnut. Um eine dichte Verbindung zu gewährleisten, muss die Elastomerdichtung nach Verpressung an beiden Nutwänden und am Nutgrund umlaufend anliegen. Die Spreizung der Y-förmigen Elastomerdichtung bewirkt damit im oberen Nutbereich eine verstärkte Anformung an die Nutwände. Da die Anlagefläche der Elastomerdichtung im oberen Bereich der Nut liegt, kann die am Kunststoffformteil angeformte Rippe, welche eine Nutwand bildet, auch verkürzt ausgeführt werden ohne die Anlagefläche zu beeinträchtigen.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigen
- Figur 1: eine Dichtungsanordnung durch eine Flanschverbindung im Vollschnitt,
- Figur 2: einen Teilausschnitt aus einer Dichtungsanordnung im Vollschnitt, der Figur 1 entsprechende Bauteile sind mit gleichen Bezugszeichen versehen,
- Figur 3: ein Filtergehäuse mit erfindungsgemäßer Dichtungsanordnung als Explosionszeichnung in perspektivischer Ansicht. Den vorhergehenden Figuren entsprechende Bauteile sind mit gleichen Bezugszeichen versehen.

### Beschreibung der Ausführungsbeispiele

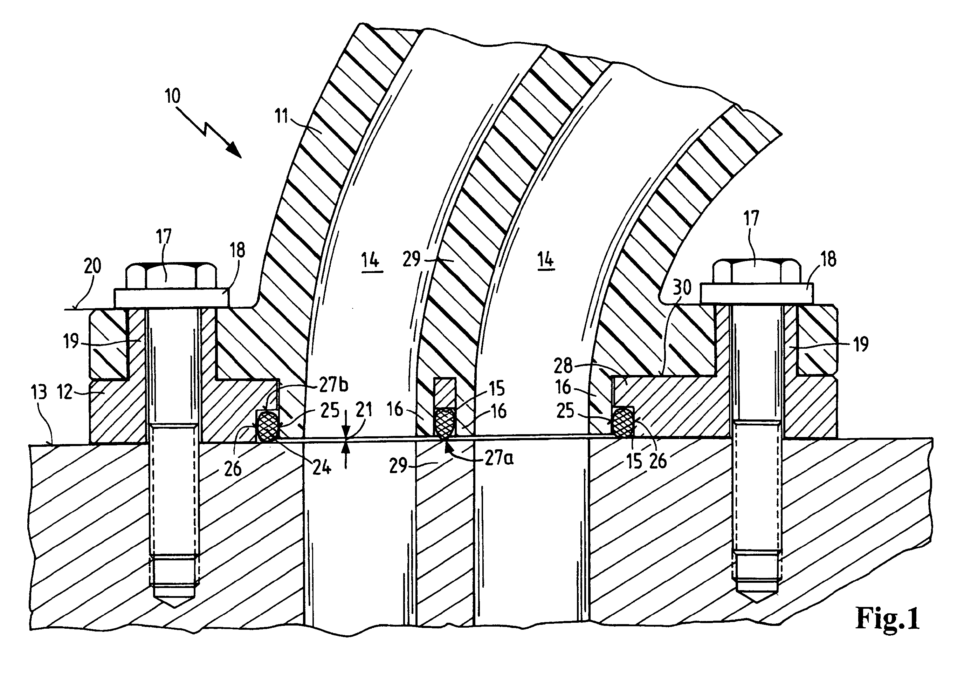

Figur 1 zeigt ein Kunststoffformteil 11, an welchem eine Dichtungsanordnung 10 sichtbar dargestellt ist. Das Kunststoffformteil 11 ist durch eine Schraubverbindung 17 und eine Spannscheibe 18 gemeinsam mit dem Dichtungsträger 12 auf die metallische Anlagefläche 13 gespannt. Im gezeigten Ausführungsbeispiel werden jeweils zwei Strömungsquerschnitte 14 die im Betriebszustand mit Druck beaufschlagt sind, von der Elastomerdichtung 24, welche dem Nutumfang angepasst ist umschlossen. Die Elastomerdichtung 24 liegt auf der metallischen Anlagefläche 13 und gegenüber am Absatz 28 des Dichtungsträgers 12 an. Am Dichtungsträger 12 ist die Buchse 19 einstückig, wobei die Buchse 19 das Kunststoffformteil 11 durchdringt und bündig in der Spannfläche 20 mündet. Die Spannfläche 20 und die Stirnfläche der Buchse 19 werden beide mittels der Spannscheibe 18 durch die Schraubverbindung 17 an die metallische Anlagefläche 13 angespannt. Es findet eine direkte metallische Verspannung zwischen Schraubverbindung 17, Dichtungsträger 12 und metallischer Anlagefläche 13 statt. Gleichzeitig ist das Kunststoffformteil 11 über die Anlagefläche 30 des Kunststoffformteils 11 an den Dichtungsträger 12 angespannt. Die am Kunststoffformteil 11 angeordneten Rippen 16 bilden in der Nut 15 der Mittenwandung 29 beide Nutwände. Zwischen den Stirnseiten der Rippen 16 und der metallischen Anlagefläche 13 ist ein Spalt 21 vorhanden, welcher Fertigungstoleranzen und Ausdehnungstoleranzen des Kunststoffformteils 11 gewährleistet.

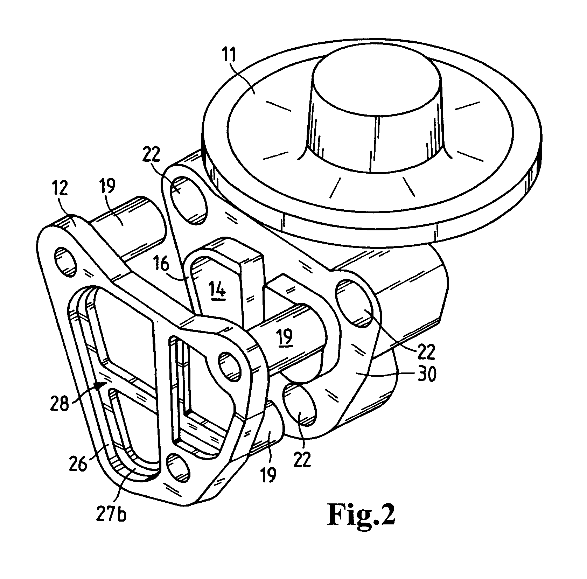

In Figur 2 ist ein Kunststoffformteil 11 gezeigt, welches mit dem Dichtungsträger 12 hier perspektivisch dargestellt ist. Die am Dichtungsträger 12 angeordnete Buchsen 19, stimmen mit dem Lochbild der Bohrungen 22 des Kunststoffformteils 11 überein. Die am Kunststoffformteil 11 angeordneten Rippen 16 umschließen den Strömungsquerschnitt 14 und kommunizieren mit den ausgesparten Absätzen 28 des Dichtungsträgers 12. Zur Montage wird der Dichtungsträger 12 mit den Buchsen 19 durch die Bohrungen 22 des Kunststoffformteils 11 geschoben, bis der Dichtungsträger 12 mit den Anlageflächen des Kunststoffformteils 30 dicht abschließt. Im montierten Zustand bildet sich somit zwischen den Rippen 16 und der äußeren Nutwand 26 die in Figur 1 gezeigte Nut 15.

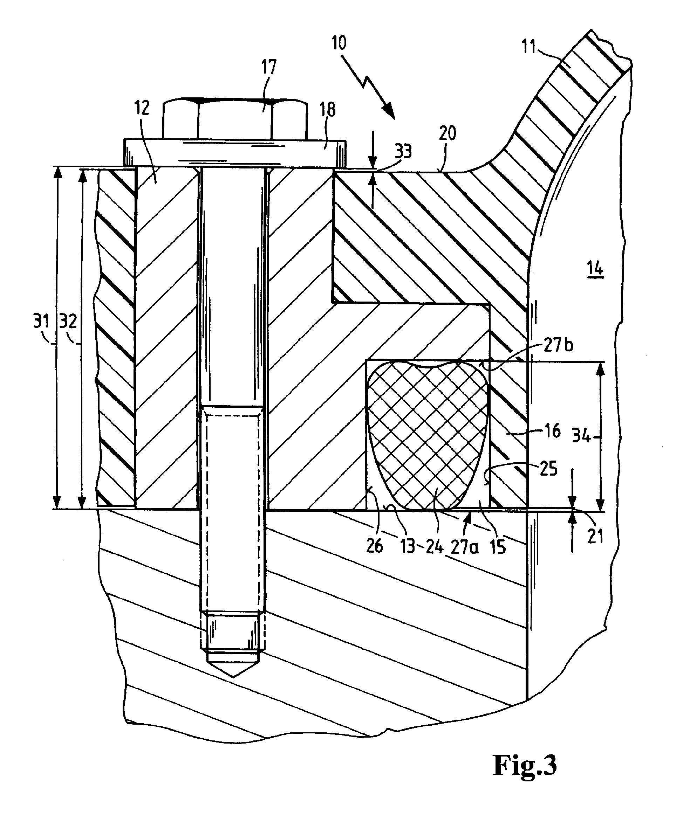

In Figur 3 ist die montierte Dichtungsanordnung 10 mit eingespannter Elastomerdichtung 24 sichtbar. Der Dichtungsträger 12 ist mit der metallischen Anlagefläche 13 direkt in Berührung, während die Rippe 16 des Kunststoffformteils 11 an ihrer Stirnseite einen Spalt 21 zur metallischen Anlagefläche 13 aufweist. Die Buchsenhöhe 31 übersteht die Montagehöhe 32 des Kunststoffformteiles 11 wodurch sich zwischen Spannscheibe 18 und der Spannfläche 20 ein Tolleranzspalt 33 ergibt. Da die Elastomerdichtung 24 in unverspanntem Zustand höher ist als die Nuthöhe 34, legt sich die Elastomerdichtung 24 an alle umlaufenden Flächen der Dichtnut 15 an. Die äußere Nutwand 26 und der obere Nutgrund 27b werden vom Dichtungsträger 12 gebildet. Der untere Nutgrund 27a wird von der metallischen Anlagefläche 13 gebildet und die innere Nutwand 25 wird von einer Rippe 16 des Kunststoffformteils 11 gebildet. Die Elastomerdichtung 24 weist im nicht dargestellten, unverspanntem Zustand eine Y-förmigen Querschnitt auf, wobei die Y-Form stehend auf der metallischen Anlagefläche 13 angeordnet ist. Die beiden oberen Schenkel des Y der Elastomerdichtung 14 sind somit im oberen Bereich der Nut 15 angeordnet, wodurch die Anlagefläche zwischen Elastomerdichtung 24 und den Nutwänden ebenso im oberen Bereich liegt..

## Patentansprüche

1. Dichtungsanordnung (10) zwischen einem Kunststoffformteil (11) und einer metallischen Anlagefläche (13), bei der zwischen Kunststoffformteil (11) und metallischer Anlagefläche (13) ein Dichtungsträger (12) angeordnet ist, wobei zwischen Kunststoffformteil (11) und Dichtungsträger (12) eine umlaufende Dichtnut (15) gebildet ist, in weicher eine Elastomerdichtung (24) vorgesehen ist, welche in eingespanntem Zustand mit der metallischen Anlagefläche (13) und den umlaufenden Anlageflächen der Dichtnut (15) in Berührung gebracht ist und eine dichte Verbindung zwischen Kunststoffformteil (11) und metallischer Anlagefläche (13) herstellt, wobei ein Nutgrund (27b) durch den Dichtungsträger (12) gebildet ist und mindestens eine Nutwand (25, 26)durch das Kunststoffformteil (11) gebildet ist, **dadurch gekennzeichnet, dass** die Elastomerdichtung (24) einen Y-förmigen Querschnitt aufweist, wobei die beiden oberen Schenkel der Elastomerdichtung (24) sowohl mit dem Nutgrund (27b) als auch mit beiden Nutwänden (25, 26) in Kontakt stehen.

2. Dichtungsanordnung (10) nach einem der vorhergehenden Ansprüche **dadurch gekennzeichnet, dass** eine am Dichtungsträger (12) angeordnete Buchse (19), in eine Bohrung (22) des Kunststoffformteils (11) eingepasst ist, wobei die Stirnseite der Buchse (19) annähernd bündig mit einer Spannfläche des Kunststoffformteils (11) abschließt, wodurch der Dichtungsträger (12) durch eine Schraubverbindung direkt mit der metallischen Anlagefläche (13) verspannt ist.

3. Dichtungsanordnung (10) nach Anspruch 2, wobei eine Spannscheibe (18) die Buchse (19) umfangsseitig überragt, wodurch der Dichtungsträger (12) und das Kunststoffformteil (11) gleichzeitig durch die Schraubverbindung an die metallische Anlagefläche (13) gespannt sind und die Spannkraft zwischen Kunststoffformteil (11) und Dichtungsträger (12) durch einen Überstand der Spannfläche (20) des Kunststoffformteils (11) über die Stirnseite der Buchse (19) des Dichtungsträgers (12) bestimmt ist.

## Claims

1. Sealing arrangement (10) between a plastic molded part (11) and a metallic contact surface (13), a sealing carrier (12) being disposed between plastic molded part (11) and metallic contact surface (13), and a circumferential sealing groove (15) being formed between plastic molded part (11) and sealing carrier (12) in which an elastomer sealing (24) is provided which in clamped state is brought into contact with the metallic contact surface (13) and the circumferential contact surfaces of the sealing groove (15), creating a tight connection between plastic molded part (11) and metallic contact surface (13), a groove base (27b) being formed by the sealing carrier (12) and at least one groove wall (25, 26) being formed by the plastic molded part (11), **characterized in that** the elastomer sealing (24) features a Y-shaped cross section, the two upper sides of the elastomer sealing (24) being in contact with the groove base (27b) and the two groove walls (25, 26).

2. Sealing arrangement (10) according to one of the above-mentioned claims, **characterized in that** a jack (19) disposed at the sealing carrier (12) is fit into a borehole (22) of the plastic molded part (11), the front end of the jack (19) being roughly flush with a clamping surface of the plastic molded part (11), whereby the sealing carrier (12) is directly clamped with the metallic contact surface (13) by means of a screwed connection.

3. Sealing arrangement (10) according to claim 2, a conical spring washer (18) projecting above the jack (19) at its circumference, whereby the sealing carrier (12) and the plastic molded part (11) are clamped at the same time by the screwed connection to the metallic contact surface (13) and the clamping force between plastic molded part (11) and sealing carrier (12) is defined by a projection of the clamping surface (20) of the plastic molded part (11) above the front end of the jack (19) of the sealing carrier (12).

## Revendications

1. Garniture d'étanchéité (10) entre une pièce moulée en matière plastique (11) et une surface d'appui métallique (13) selon laquelle, un support de joint (12) est installé entre la pièce moulée en matière plastique (11) et la surface d'appui métallique (13),
une rainure d'étanchéité (15), périphérique, est formée entre la pièce en matière plastique moulée (11) et le support de joint (12), cette rainure recevant un joint d'étanchéité en élastomère (24) qui, a l'état enserré, est en contact avec la surface d'appui métallique (13) et avec les surfaces d'appui périphériques de la rainure d'étanchéité (15) et réalise une liaison étanche entre la pièce moulée en matière plastique (11) et la surface d'appui métallique (13),
le support de joint (12) formant le fond de rainure (27b) et au moins une paroi de rainure (25, 26) est formée par la pièce en matière plastique moulée (11),
**caractérisée en ce que**
le joint d'étanchéité en élastomère (24) a une section en forme de Y,
les deux branches supérieures du joint d'étanchéité en élastomère (24) étant en contact avec à la fois le fond de rainure (27b) et aussi avec les deux parois de rainure (25, 26).

2. Garniture d'étanchéité (10) selon la revendication précédente,
**caractérisée en ce qu'**
un manchon (19), prévu sur le support de joint d'étanchéité (12), est ajusté dans un perçage (22) de la pièce en matière plastique moulée (11),
la face frontale du manchon (19) rejoignant sensiblement à niveau, une surface de serrage de la pièce moulée en matière plastique (11),
le support de joint d'étanchéité (12) étant serré par une liaison vissée directement contre la surface d'appui métallique (13).

3. Garniture d'étanchéité (10) selon la revendication 2, dans laquelle une rondelle de serrage (18) dépasse du côté périphérique le manchon (19),
le support de joint d'étanchéité (12) et la pièce moulée en matière plastique (11) étant simultanément serrés contre la surface d'appui métallique (13) par la liaison vissée et la force de serrage exercée entre la pièce moulée en matière plastique (11) et le support de joint d'étanchéité (12) est définie par le dépassement de la surface de serrage (20) de la pièce moulée en matière plastique (11) par rapport à la face frontale du manchon (19) du support de oint d'étanchéité (12).
